(19) **Europäisches Patentamt / European Patent Office / Office européen des brevets**

(11) **EP 4 729 474 A1**

(12) **EUROPEAN PATENT APPLICATION**
published in accordance with Art. 153(4) EPC

(43) Date of publication:
**22.04.2026 Bulletin 2026/17**

(21) Application number: **23949220.0**

(22) Date of filing: **07.11.2023**

(51) International Patent Classification (IPC):
**C01B 21/086** (2006.01)   **H01M 10/0568** (2010.01)

(52) Cooperative Patent Classification (CPC):
**C01B 21/086; H01M 10/0568**

(86) International application number:
**PCT/KR2023/017720**

(87) International publication number:
**WO 2025/037675 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.08.2023 KR 20230107875**

(71) Applicant: **EP CHEMTECH CO., LTD.**
**Chungcheongbuk-do 27651 (KR)**

(72) Inventors:
• **LEE, Sung Kwun**
  **Ansan-si Gyeonggi-do 15539 (KR)**
• **LEE, Soon Ho**
  **Gunsan-si, Jeollabuk-do 54082 (KR)**
• **LEE, Hee Jin**
  **Gunsan-si Jeollabuk-do 54104 (KR)**
• **HA, Jae Seong**
  **Gunsan-si Jeollabuk-do 54103 (KR)**

(74) Representative: **Nederlandsch Octrooibureau**
**P.O. Box 29720**
**2502 LS The Hague (NL)**

(54) **METHOD FOR PREPARING BISFLUOROSULFONYLIMIDE AMMONIUM SALT**

(57)   Disclosed is a method for preparing a bisfluorosulfonylimide ammonium salt. According to an embodiment of the present invention, the method for preparing a bisfluorosulfonylimide ammonium salt comprises the steps of: introducing ammonium fluoride (NH4F), fluorinated alkali metal or cesium halide, and a reaction solvent into a reaction vessel and then cooling to a first temperature range; adding bischlorosulfonylimide (HCSI) dropwise to the reaction vessel, raising the temperature to a second temperature range when the exothermic reaction is completed, and then reacting during a first time range; and, when the reaction is completed, filtering to remove impurities and introducing a non-polar solvent into a filtrate to obtain a bisfluorosulfonylimide ammonium salt through a recrystallization process. The present invention can provide a method for preparing a bisfluorosulfonylimide ammonium salt, which is capable of improving the yield of the bisfluorosulfonylimide ammonium salt.

**Description**

CROSS-REFERENCE TO RELATED APPLICATIONS

This application is a National Phase Application of PCT International Application No. PCT/KR2023/017720, which was filed on November 7, 2023, and which claims priority from Korean Patent Application No. 10-2023-0107875 filed with the Korean Intellectual Property Office on August 17, 2023. The disclosures of the above patent applications are incorporated herein by reference in their entirety.

TECHNICAL FIELD

The invention relates to a method for preparing a bisfluorosulfonylimide ammonium salt, more particularly to a method for preparing a bisfluorosulfonylimide ammonium salt that can improve the yield and purity of the bisfluorosulfonylimide ammonium salt by adding cesium fluoride during the preparation of the bisfluorosulfonylimide ammonium salt.

BACKGROUND ART

A bisfluorosulfonylimide salt (such as a fluorosulfonylimide alkali metal salt, etc., for example) is a compound used for various purposes, such as an electrolyte, particularly an electrolyte for a lithium secondary battery, an electrolyte liquid for a fuel cell, a selective electrophilic fluorinating agent, an infrared absorbing dye, and the like.

A bisfluorosulfonylimide ammonium salt is useful as an intermediate in the preparation of a bisfluorosulfonylimide salt.

The conventional method for preparing a bisfluorosulfonylimide ammonium salt involves adding an ammonium fluoride reagent to bischlorosulfonylimide. Although ammonium fluoride provides the advantages of convenient use and low cost compared to other fluorinating reagents, there is the problem that the product yield is reduced due to its poor fluorine substitution ability.

DETAILED DESCRIPTION OF THE INVENTION

Technical Problem

Accordingly, an aspect of the invention, which was conceived to resolve the problem described above, is to provide a method for preparing a bisfluorosulfonylimide ammonium salt that can improve the yield of the bisfluorosulfonylimide ammonium salt.

Another aspect of the invention is to provide a method for preparing a bisfluorosulfonylimide ammonium salt that can improve the purity of the bisfluorosulfonylimide ammonium salt.

Other objectives of the invention will be more clearly understood from the preferred embodiments set forth below.

Technical Solution

According to an aspect of the invention, a method for preparing a bisfluorosulfonylimide ammonium salt includes: adding ammonium fluoride ($NH_4F$), an alkali metal fluoride or a cesium halide, and a reaction solvent into a reaction vessel and then cooling the mixture to a first temperature range; adding bischlorosulfonylimide (HCSI) dropwise to the reaction vessel and, when the exothermic reaction ends, heating to a second temperature range and reacting for the duration of a first time range; and when the reaction is completed, removing impurities by filtration, adding a non-polar solvent to the filtrate, and obtaining a bisfluorosulfonylimide ammonium salt through a recrystallization process.

Here, the first temperature range can include temperatures of normal temperature or lower, the second temperature range can include temperatures of normal temperature or higher, and the first time range can be 1 hour or longer.

Here, the first temperature range can be -20 ~ 25 °C, the second temperature range can be 30 ~ 90 °C, and the first time range can be 2 ~ 24 hours.

Here, the second temperature range can be 40 ~ 85 °C, and the first time range can be 4 ~ 12 hours.

Here, the alkali metal fluoride can be cesium fluoride (CsF).

Here, a ratio of the equivalents of the ammonium fluoride ($NH_4F$) and the cesium fluoride (CsF) relative to the dropwise added bischlorosulfonylimide (HCSI) can be 4 : 0.1~0.5.

Here, the ratio of the equivalents of the ammonium fluoride ($NH_4F$) and the cesium fluoride (CsF) can be 4 : 0.3~0.5.

Here, a ratio of the equivalents of the ammonium fluoride ($NH_4F$) and the cesium fluoride (CsF) relative to the dropwise added bischlorosulfonylimide (HCSI) can be 2~3 : 0.3.

Here, the alkali metal fluoride can be rubidium fluoride (RbF).

Here, the alkali metal fluoride can be potassium fluoride (KF), sodium fluoride (NaF), or lithium fluoride (LiF) and can be present in an amount of 3000 ppm or lower.

Here, the cesium halide can be any one of cesium chloride (CsCl), cesium bromide (CsBr), and cesium iodide (CsI).

Here, a ratio of the equivalents of the ammonium fluoride ($NH_4F$) and the cesium halide relative to the dropwise added bischlorosulfonylimide (HCSI) can be 2.5 : 0.3.

Here, the reaction solvent can be at least one solvent selected from butyl acetate, ethyl acetate, isopropyl acetate, isobutyl acetate, and ethyl isobutyrate.

Here, the non-polar solvent can be at least one solvent selected from toluene, chloroform, dichloromethane and 1,2-dichlorobenzene, diethyl ether, dipropyl ether, cyclohexane, chlorobenzene, and xylene.

Advantageous Effects

An embodiment of the invention can provide a method for preparing a bisfluorosulfonylimide ammonium salt that can improve the yield of the bisfluorosulfonylimide ammonium salt.

Also, an embodiment of the invention can provide a method for preparing a bisfluorosulfonylimide ammonium salt that can improve the purity of the bisfluorosulfonylimide ammonium salt.

MODE FOR CARRYING OUT THE INVENTION

As the invention allows for various changes and numerous embodiments, particular embodiments will be illustrated in the drawings and described in detail in the written description. However, this is not intended to limit the invention to particular modes of practice, and it is to be appreciated that all changes, equivalents, and substitutes that do not depart from the spirit and technical scope of the invention are encompassed by the invention. In the description of the invention, certain detailed explanations of the related art are omitted if it is deemed that they may unnecessarily obscure the essence of the invention.

While such terms as "first" and "second," etc., can be used to describe various components, such components are not to be limited by the above terms. The above terms are used only to distinguish one component from another.

The terms used in the present specification are merely used to describe particular embodiments and are not intended to limit the invention. An expression used in the singular encompasses the expression of the plural, unless it has a clearly different meaning in the context. In the present specification, it is to be understood that terms such as "including" or "having," etc., are intended to indicate the existence of the features, numbers, steps, actions, components, parts, or combinations thereof disclosed in the specification and are not intended to preclude the possibility that one or more other features, numbers, steps, actions, components, parts, or combinations thereof may exist or may be added. Certain embodiments of the invention will be described below in more detail.

Additionally, terms of degree such as "about", "substantially", etc., as used in the specification, are intended to convey the sense of being at or close to the disclosed numeral when a preparation or substance tolerance unique to the mentioned context is presented, and are intended to prevent the unconscionable infringer from unfairly taking advantage of the disclosure in which exact or absolute numerical values are stated to assist the understanding of the invention.

The invention relates to a method for preparing a bisfluorosulfonylimide ammonium salt, which is a synthesis intermediate for a bisfluorosulfonylimide salt, which in turn provides excellent performance as an electrolyte. In particular, the invention relates to a method for preparing a bisfluorosulfonylimide ammonium salt that can improve the yield and purity of the bisfluorosulfonylimide ammonium salt by adding an alkali metal fluoride or a cesium halide during the preparation of the bisfluorosulfonylimide ammonium salt.

Here, the bis(chlorosulfonyl)imide can be obtained by reacting chlorosulfonic acid with chlorosulfonyl isocyanate. However, the invention is not thus limited, and it is sufficient to carry out a conventionally disclosed method or use a commercially available product. In addition, N-(chlorosulfonyl)-N-(fluoroalkylsulfonyl)imide may be used, which can be obtained by a reaction between chlorosulfonyl isocyanate and a fluoroalkylsulfonic acid, a reaction between fluoroalkylsulfonyl isocyanate and chlorosulfonic acid, or the like.

Also, the alkali metal fluoride may include cesium fluoride (CsF), rubidium fluoride (RbF), potassium fluoride (KF), sodium fluoride (NaF), and lithium fluoride (LiF). The order of fluorine substitution ability of the alkali metal fluorides, including ammonium fluoride (NH4F), is as follows.

$$CsF > RbF > KF > NaF > NH_4F > LiF$$

In the invention, ammonium fluoride ($NH_4F$) and an alkali metal fluoride are added together to the reaction, in order to supplement the fluorine substitution ability of the ammonium fluoride ($NH_4F$). While it would be most preferable in the invention to use cesium fluoride (CsF), which has the best fluorine substitution ability among the alkali metal fluorides, the invention is not thus limited. That is, the alkali metal fluoride added together with the ammonium fluoride ($NH_4F$) may be rubidium fluoride (RbF), potassium fluoride (KF), sodium fluoride (NaF), lithium fluoride (LiF), or a mixture thereof. Additionally, the alkali metal fluoride added together with the ammonium fluoride ($NH_4F$) may be present in an amount of 3000 ppm or less. More specifically, the potassium fluoride (KF), sodium fluoride (NaF), or lithium fluoride (LiF) added together with the ammonium fluoride ($NH_4F$) may be present in an amount of 3000 ppm or less. Furthermore, the improvements in the yield and purity of the bisfluorosulfonylimide ammonium salt, obtained as a result of adding ammonium fluoride ($NH_4F$) and an alkali metal fluoride together to the reaction, will be described later on with reference to Test Examples.

Also, the reaction solvent used in the preparation of the bisfluorosulfonylimide ammonium salt may be at least one solvent selected from butyl acetate, ethyl acetate, isopropyl acetate, isobutyl acetate, and ethyl isobutyrate.

Also, the non-polar solvent used for the recrystallization of the bisfluorosulfonylimide ammonium salt may be at least one solvent selected from toluene, chloroform, dichloromethane and 1,2-dichlorobenzene, diethyl ether, dipropyl ether, cyclohexane, chlorobenzene, and xylene.

A more detailed description of the invention is provided below with reference to Test Examples. It should be apparent, however, that these Test Examples are presented merely to aid the understanding of the invention and that the scope of the invention is not limited by the Test Examples.

[Test Example 1]

(Step 1 Reaction) Preparation of bischlorosulfonylimide (HCSI)

432.2 g (3,709.2 mmol) of chlorosulfonic acid ($ClSO_3H$) was slowly added to 500.0 g (3,532.8 mmol) of chlorosulfonyl isocyanate ($OCNSO_2Cl$), after which the mixture was stirred with a magnetic stirrer. The stirred solution was heated from normal temperature to 130 °C and reacted for 24 hours. Here, the progress of the reaction can be observed from whether or not $CO_2$ gas is being generated. More specifically, the reaction can be determined to be complete when $CO_2$ gas is no longer being generated. After the reaction was completed, 718.4 g (3,356.2 mmol) of bischlorosulfonylimide (HCSI) was obtained as a yellow liquid (yield: 95%).

(Step 2 Reaction) Preparation of bisfluorosulfonylimide ammonium salt ($NH_4FSI$)

120 g of butyl acetate was added to 20.76 g (560.6 mmol) of ammonium fluoride ($NH_4F$) and 2.13 g (14.0 mmol) of cesium fluoride (CsF), after which the mixture was cooled to -5 °C or lower and stirred with a magnetic stirrer. Subsequently, 30 g (140.2 mmol) of the bischlorosulfonylimide (HCSI) obtained in the step 1 reaction above was slowly added dropwise. As heat was generated at this time, the mixture was stirred at 15°C for about 1 hour to ensure a stable reaction. After the heat generation ended, the reaction temperature was raised to 80 °C, and the reaction was carried out for 5 hours. After the reaction was completed, the mixture was cooled to 25°C and filtered to remove solid impurities. The filtrate was concentrated and then recrystallized by the addition of 90 g of toluene, which is a non-polar solvent. As a result of the recrystallization, 23.33 g (117.7 mmol) of bisfluorosulfonylimide ammonium salt ($NH_4FSI$) was obtained as a white crystalline solid (yield 84%, purity 99.3%).

The purity of the bisfluorosulfonylimide ammonium salt ($NH_4FSI$) obtained in Test Example 1 was measured using ion chromatography.

[Test Examples 2~5]

(Step 1 Reaction) Preparation of bischlorosulfonylimide (HCSI)

Bischlorosulfonylimide (HCSI) was obtained by the same method used for the step 1 reaction of Test Example 1 described above.

(Step 2 Reaction) Preparation of bisfluorosulfonylimide ammonium salt ($NH_4FSI$)

Bisfluorosulfonylimide ammonium salt ($NH_4FSI$) was prepared by reacting the bischlorosulfonylimide (HCSI) obtained in the step 1 reaction above. However, Test Examples 2~5 were respectively carried out with variations, shown in Table 1 below, in the equivalents of ammonium fluoride ($NH_4F$) and cesium fluoride (CsF) relative to the bischlorosulfonylimide (HCSI) added in the step 2 reaction. The purity of the bisfluorosulfonylimide ammonium salt ($NH_4FSI$) obtained in each of Test Examples 2~5 was measured using ion chromatography.

[Comparative Example 1]

(Step 1 Reaction) Preparation of bischlorosulfonylimide (HCSI)

Bischlorosulfonylimide (HCSI) was obtained by the same method used for the step 1 reaction of Test Example 1 described above.

(Step 2 Reaction) Preparation of bisfluorosulfonylimide ammonium salt (NH₄FSI)

Bisfluorosulfonylimide ammonium salt (NH₄FSI) was prepared by reacting the bischlorosulfonylimide (HCSI) obtained in the step 1 reaction above. The substantial difference between the step 2 reaction of Comparative Example 1 and the step 2 reactions of Test Examples 1~5 is that cesium fluoride (CsF) was not used.
120 g of butyl acetate was added to 20.76 g (560.4 mmol) of ammonium fluoride (NH₄F), after which the mixture was cooled to -5 °C or lower and stirred with a magnetic stirrer. Subsequently, 30 g (140.2 mmol) of the bischlorosulfonylimide (HCSI) obtained in the step 1 reaction above was slowly added dropwise. As heat was generated at this time, the mixture was stirred at 15°C for about 1 hour to ensure a stable reaction. After the heat generation ended, the reaction temperature was raised to 80 °C, and the reaction was carried out for 5 hours. After the reaction was completed, the mixture was cooled to 25°C and filtered to remove solid impurities. The filtrate was concentrated and then recrystallized by the addition of 90 g of toluene, which is a non-polar solvent. As a result of the recrystallization, 20.27 g (102.3 mmol) of bisfluorosulfonylimide ammonium salt (NH₄FSI) was obtained as a white crystalline solid (yield 73%, purity 98.3%). The purity of the bisfluorosulfonylimide ammonium salt (NH₄FSI) obtained in Comparative Example 1 was measured using ion chromatography.

[Table 1]

| ID | NH₄FSI synthesis result | | | |
| --- | --- | --- | --- | --- |
| | Relative to the added HCSI: | | Yield (%) | Purity (%) |
| | Equivalent of NH₄F | Equivalent of CsF | | |
| Test example 1 | 4 eq | 0.1 eq | 84% | 98.6 |
| Test example 2 | 4 eq | 0.2 eq | 87% | 98.9 |
| Test example 3 | 4 eq | 0.3 eq | 92% | 99.1 |
| Test example 4 | 4 eq | 0.4 eq | 91% | 99.4 |
| Test example 5 | 4 eq | 0.5 eq | 90% | 99.2 |
| Comparative Example 1 | 4 eq | - | 73 | 98.3 |

As can be seen from Table 1 above, Test Examples 1~5, in which fluorine substitution was performed using ammonium fluoride (NH₄F) and cesium fluoride (CsF) together, provided improved yields of the bisfluorosulfonylimide ammonium salt (NH₄FSI) compared to Comparative Example 1, in which cesium fluoride (CsF) was not used. Furthermore, the measurements of the yields obtained according to increased amounts of cesium fluoride (CsF) show a maximum yield at 0.3 equivalents, with the yield remaining at similar levels when greater amounts are used. In addition, when ammonium fluoride (NH₄F) and cesium fluoride (CsF) were added together to the reaction, the purity was maintained at 98.6% or higher.

[Test Examples 6~8]

(Step 1 Reaction) Preparation of bischlorosulfonylimide (HCSI)

Bischlorosulfonylimide (HCSI) was obtained by the same method used for the step 1 reaction of Test Example 1 described above.

(Step 2 Reaction) Preparation of bisfluorosulfonylimide ammonium salt (NH₄FSI)

Bisfluorosulfonylimide ammonium salt (NH₄FSI) was prepared by reacting the bischlorosulfonylimide (HCSI) obtained in the step 1 reaction above. However, Test Examples 6~8 were carried out with variations, shown in Table 2 below, in the equivalents of ammonium fluoride (NH₄F) and cesium fluoride (CsF) relative to the bischlorosulfonylimide (HCSI) added in the Step 2 reaction. The purity of the bisfluorosulfonylimide ammonium salt (NH$_4$FSI) obtained in each of Test Examples 6~8 was measured using ion chromatography.

[Comparative Examples 2~4]

(Step 1 Reaction) Preparation of bischlorosulfonylimide (HCSI)

Bischlorosulfonylimide (HCSI) was obtained by the same method used for the step 1 reaction of Test Example 1 described above.

(Step 2 Reaction) Preparation of bisfluorosulfonylimide ammonium salt (NH$_4$FSI)

Bisfluorosulfonylimide ammonium salt (NH$_4$FSI) was prepared by reacting the bischlorosulfonylimide (HCSI) obtained in the step 1 reaction above. The substantial difference between the step 2 reaction of Comparative Examples 2~4 and the step 2 reactions of Test Examples 6~8 is that cesium fluoride (CsF) was not used. Comparative Examples 2~4 were respectively carried out with variations, shown in Table 2 below, in the equivalent of ammonium fluoride (NH$_4$F) relative to the bischlorosulfonylimide (HCSI) added in the step 2 reaction. The purity of the bisfluorosulfonylimide ammonium salt (NH$_4$FSI) obtained in each of Comparative Examples 2~4 was measured using ion chromatography.

[Table 2]

| ID | NH$_4$FSI synthesis result | | | |
|---|---|---|---|---|
| | Relative to the added HCSI: | | Yield (%) | Purity (%) |
| | Equivalent of NH$_4$F | Equivalent of CsF | | |
| Test example 6 | 3 eq | 0.3 eq | 92 | 99.3 |
| Test example 7 | 2.5 eq | 0.3 eq | 91 | 99.4 |
| Test example 8 | 2 eq | 0.3 eq | 85 | 97.4 |
| Comparative Example 2 | 3 eq | - | 68 | 95.4 |
| Comparative Example 3 | 2.5 eq | - | 61 | 92.6 |
| Comparative Example 4 | 2 eq | - | 50 | 85.2 |

As can be seen from Table 2 above, Test Examples 6~8, in which fluorine substitution was performed using ammonium fluoride (NH$_4$F) and cesium fluoride (CsF) together, provided improved yields of the bisfluorosulfonylimide ammonium salt (NH$_4$FSI) compared to Comparative Examples 2~4, in which cesium fluoride (CsF) was not used. Furthermore, the measurements of the yields obtained according to increased amounts of ammonium fluoride (NH$_4$F) show a maximum yield at 3 equivalents. In addition, when ammonium fluoride (NH$_4$F) and cesium fluoride (CsF) were added together to the reaction, the purity was maintained at 97.4% or higher.

[Test Examples 9~11]

(Step 1 Reaction) Preparation of bischlorosulfonylimide (HCSI)

Bischlorosulfonylimide (HCSI) was obtained by the same method used for the step 1 reaction of Test Example 1 described above.

(Step 2 Reaction) Preparation of bisfluorosulfonylimide ammonium salt (NH$_4$FSI)

Bisfluorosulfonylimide ammonium salt (NH$_4$FSI) was prepared by reacting the bischlorosulfonylimide (HCSI) obtained in the step 1 reaction above. However, unlike Test Example 1, cesium halides (CsX, X=Cl, Br, I) were used in Test Examples 9~11 instead of cesium fluoride (CsF). Test Examples 9~11 were respectively carried out with variations, shown in Table 3 below, in the equivalents of ammonium fluoride and cesium halides (CsX) relative to the bischlorosulfonylimide (HCSI) added in the step 2 reaction. The purity of the bisfluorosulfonylimide ammonium salt (NH$_4$FSI) obtained in each of Test Examples 9~11 was measured using ion chromatography.

[Table 3]

| ID | NH₄FSI synthesis result | | | |
|---|---|---|---|---|
| | Relative to the added HCSI: | | Yield (%) | Purity (%) |
| | Equivalent of NH4F | Equivalent of CsX | | |
| Test example 9 | 2.5 eq | X=Cl 0.4 eq | 91% | 99.2 |
| Test example 10 | 2.5 eq | X=Br 0.4 eq | 89% | 99.1 |
| Test example 11 | 2.5 eq | X=I 0.4 eq | 85% | 98.4 |

Referring to Table 3 above, when the amounts of ammonium fluoride ($NH_4F$) and cesium halide (CsX) were fixed and the type of cesium halide (CsX) was changed, the measured yield was maintained at 85% or higher, and the purity was maintained at 98.4% or higher. Furthermore, the highest yield and purity were observed when cesium chloride (CsCl) was used from among the cesium halides (CsX).

The preferred embodiments of the invention provided above are disclosed for illustrative purposes only. It should be appreciated that the skilled person having ordinary skill in regard to the invention would be able to make various modifications, alterations, and additions without departing from the spirit and scope of the invention and that such modifications, alterations, and additions are encompassed within the scope of claims below.

**Claims**

1. A method for preparing a bisfluorosulfonylimide ammonium salt, the method comprising:

   adding ammonium fluoride ($NH_4F$), an alkali metal fluoride or a cesium halide, and a reaction solvent into a reaction vessel and then cooling to a first temperature range;
   adding bischlorosulfonylimide (HCSI) dropwise to the reaction vessel and, when an exothermic reaction ends, heating to a second temperature range and reacting for a duration of a first time range; and
   when the reaction is completed, removing impurities by filtration, adding a non-polar solvent to a filtrate, and obtaining a bisfluorosulfonylimide ammonium salt through a recrystallization process.

2. The method for preparing a bisfluorosulfonylimide ammonium salt according to claim 1, wherein the first temperature range includes temperatures of normal temperature or lower,

   the second temperature range includes temperatures of normal temperature or higher, and
   the first time range is 1 hour or longer.

3. The method for preparing a bisfluorosulfonylimide ammonium salt according to claim 2, wherein the first temperature range is -20 ~ 25 °C,

   the second temperature range is 30 ~ 90 °C, and
   the first time range is 2 ~ 24 hours.

4. The method for preparing a bisfluorosulfonylimide ammonium salt according to claim 3, wherein the second temperature range is 40 ~ 85 °C, and
   the first time range is 4 ~ 12 hours.

5. The method for preparing a bisfluorosulfonylimide ammonium salt according to claim 1, wherein the alkali metal fluoride is cesium fluoride (CsF).

6. The method for preparing a bisfluorosulfonylimide ammonium salt according to claim 5, wherein a ratio of equivalents of the ammonium fluoride ($NH_4F$) and the cesium fluoride (CsF) relative to the dropwise added bischlorosulfonylimide (HCSI) is 4 : 0.1~0.5.

7. The method for preparing a bisfluorosulfonylimide ammonium salt according to claim 6, wherein the ratio of equivalents of the ammonium fluoride ($NH_4F$) and the cesium fluoride (CsF) is 4 : 0.3~0.5.

8. The method for preparing a bisfluorosulfonylimide ammonium salt according to claim 5, wherein a ratio of equivalents of the ammonium fluoride ($NH_4F$) and the cesium fluoride (CsF) relative to the dropwise added bischlorosulfonylimide (HCSI) is 2~3 : 0.3.

9. The method for preparing a bisfluorosulfonylimide ammonium salt according to claim 1, wherein the alkali metal fluoride is rubidium fluoride (RbF).

10. The method for preparing a bisfluorosulfonylimide ammonium salt according to claim 1, wherein the alkali metal fluoride is potassium fluoride (KF), sodium fluoride (NaF), or lithium fluoride (LiF) and is present in an amount of 3000 ppm or lower.

11. The method for preparing a bisfluorosulfonylimide ammonium salt according to claim 1, wherein the cesium halide is any one of cesium chloride (CsCl), cesium bromide (CsBr), and cesium iodide (CsI).

12. The method for preparing a bisfluorosulfonylimide ammonium salt according to claim 11, wherein a ratio of equivalents of the ammonium fluoride ($NH_4F$) and the cesium halide relative to the dropwise added bischlorosulfonylimide (HCSI) is 2.5 : 0.3.

13. The method for preparing a bisfluorosulfonylimide ammonium salt according to claim 1, wherein the reaction solvent is at least one solvent selected from butyl acetate, ethyl acetate, isopropyl acetate, isobutyl acetate, and ethyl isobutyrate.

14. The method for preparing a bisfluorosulfonylimide ammonium salt according to claim 1, wherein the non-polar solvent is at least one solvent selected from toluene, chloroform, dichloromethane and 1,2-dichlorobenzene, diethyl ether, dipropyl ether, cyclohexane, chlorobenzene, and xylene.

# INTERNATIONAL SEARCH REPORT

| International application No. |
|---|
| **PCT/KR2023/017720** |

| A. | CLASSIFICATION OF SUBJECT MATTER |
|---|---|
| | **C01B 21/086**(2006.01)i; **H01M 10/0568**(2010.01)i |

According to International Patent Classification (IPC) or to both national classification and IPC

| B. | FIELDS SEARCHED |
|---|---|

Minimum documentation searched (classification system followed by classification symbols)

C01B 21/086(2006.01); C01B 21/093(2006.01); H01M 10/0568(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비스플루오로설포닐이미드 암모늄염(bisfluorosulfonylimide ammonium salt), 플루오린화 암모늄(ammonium fluoride, NH4F), 플루오린화 알칼리 금속(alkali metal fluoride), 할로겐화 세슘(cesium halide), 비스클로로설포닐이미드(bischlorosulfonylimide, HCSI), 재결정(recrystallization)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2018-0121137 A (CHUN BO., LTD.) 07 November 2018 (2018-11-07) <br> See abstract; paragraphs [0050] and [0051]; and claims 1-3. | 1-14 |
| Y | WO 2022-053002 A1 (SOLVAY SA) 17 March 2022 (2022-03-17) <br> See abstract; pages 10-11 and 19-20; and claims 1 and 5. | 1-14 |
| A | KR 10-2022-0084067 A (SOLVAY(SOCIETE ANONYME)) 21 June 2022 (2022-06-21) <br> See entire document. | 1-14 |
| A | JP 2014-201453 A (NIPPON SHOKUBAI CO., LTD.) 27 October 2014 (2014-10-27) <br> See entire document. | 1-14 |
| A | JP 2022-538048 A (SOLVAY) 31 August 2022 (2022-08-31) <br> See entire document. | 1-14 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 May 2024** | **30 May 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/017720**

| Patent document cited in search report | | | Publication date (day/month/year) | Patent family member(s) | | | Publication date (day/month/year) |
|---|---|---|---|---|---|---|---|
| KR | 10-2018-0121137 | A | 07 November 2018 | KR | 10-1944731 | B1 | 07 February 2019 |
| WO | 2022-053002 | A1 | 17 March 2022 | CN | 116390894 | A | 04 July 2023 |
| | | | | EP | 4211075 | A1 | 19 July 2023 |
| | | | | JP | 2023-541873 | A | 04 October 2023 |
| | | | | US | 2023-0373788 | A1 | 23 November 2023 |
| KR | 10-2022-0084067 | A | 21 June 2022 | CN | 114585586 | A | 03 June 2022 |
| | | | | EP | 4045459 | A1 | 24 August 2022 |
| | | | | JP | 2022-552308 | A | 15 December 2022 |
| | | | | WO | 2021-074142 | A1 | 22 April 2021 |
| JP | 2014-201453 | A | 27 October 2014 | JP | 6139944 | B2 | 31 May 2017 |
| JP | 2022-538048 | A | 31 August 2022 | CN | 114040888 | A | 11 February 2022 |
| | | | | EP | 3990384 | A1 | 04 May 2022 |
| | | | | EP | 3990384 | B1 | 20 December 2023 |
| | | | | US | 2022-0250910 | A1 | 11 August 2022 |
| | | | | WO | 2020-260047 | A1 | 30 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2023017720 W

- KR 1020230107875